# EUROPÄISCHE PATENTSCHRIFT

(11) **EP 0 618 111 B1**
(45) Veröffentlichungstag und Bekanntmachung des Hinweises auf die Patenterteilung: **19.06.1996**
(21) Anmeldenummer: 94104182.4
(22) Anmeldetag: 17.03.1994
(51) Int. Cl.: B60R 22/18

(54) **Gurtstraffer für ein Fahrzeugsicherheitsgurtsystem**
Belt tensioning device for a vehicle seat belt system
Tendeur de ceinture pour système de ceinture de sécurité pour véhicule

(30) Priorität: 02.04.1993 DE 9305086 U
(43) Veröffentlichungstag der Anmeldung: 05.10.1994
(73) Patentinhaber: TRW Occupant Restraint Systems GmbH, D-73553 Alfdorf (DE)
(72) Erfinder: Betz, Hans-Peter, D-73560 Böbingen (DE)
(74) Vertreter: Degwert, Hartmut, Dipl.-Phys.

(56) Entgegenhaltungen:
- DE-U- 8 900 013
- US-A- 3 239 273
- US-A- 4 458 921
- PATENT ABSTRACTS OF JAPAN vol. 16, no. 239 (M-1258) 2. Juni 1992 & JP-A-04 050 058 (TAKATA K.K.) 19. Februar 1992

## Beschreibung

Die Erfindung betrifft einen Gurtstraffer in einem Fahrzeugsicherheitsgurtsystem, mit einer Kolben/Zylinder-Anordnung, einem Zugseil, das einerseits an dem Gurtschloß und andererseits an dem im Zylinder verschiebbar gelagerten Kolben angeschlossen ist, und einer Rücklaufsperre, die eine Bewegung des Kolbens entgegen der Strafferrichtung verhindert.

Gurtstraffer sind in unterschiedlichen Ausführungsformen bekannt. Beispielsweise ist in der gattungsbildenden DE 89 00 013.7 U1 ein mechanischer Gurtstraffer offenbart, der zwei axial verschiebbare Kolben in einem Zylinder aufweist. Zwischen den am Zugseil befestigten Kolben ist ein scheibenförmiges Sperrelement angeordnet, durch das das Zugseil hindurchgeführt ist. Der gurtschloßnahe Kolben ist an seiner dem anderen Kolben zugewandten Seite abgeschrägt ausgebildet, und das Sperrelement weist mindestens etwa die gleiche elliptische Form und Abmessung auf, die durch die Abschrägung des gurtschloßnahen Kolbens gebildet wird. Bei Aktivierung des Gurtstraffers wird das Sperrelement gegen die Abschrägung gedrückt und der Kolben ist in Strafferrichtung ungehindert verschiebbar. Mit der Bewegungsumkehr des Kolbens drückt der gurtschloßferne Kolben das Sperrelement in Richtung einer zum Zugseil senkrechten Stellung, wodurch das Sperrelement gegen die Wandung des Zylinders gedrückt und bei hohen Kräften in diese eingedrückt wird. Das Sperrelement wird somit gegen eine weitere Bewegung des Kolbens entgegen der Strafferrichtung blockiert. Auf diese Weise ist eine Rücklaufsperre für die Kolben/Zylinder-Anordnung gebildet.

Der Erfindung liegt die Aufgabe zugrunde, einen Gurtstraffer der eingangs angegebenen Art dahingehend weiterzubilden, daß bei einfacher Herstellung und Montage nur ein kurzer Weg des Kolbens zur Aktivierung der Rücklaufsperre benötigt wird.

Diese Aufgabe wird bei einem Gurtstraffer der eingangs angegebenen Art erfindungsgemäß dadurch gelöst, daß der Kolben eine Umfangsnut aufweist, in der zwei Halbringscheiben in entgegengesetzter Schrägstellung zur Achse des Kolbens und sich mit den Umfangsenden aufeinander abstützend angeordnet sowie an ihrem Außenumfang mit der Wandung des Zylinders in Berührung gehalten sind. Diese erfindungsgemäße Ausbildung zeichnet sich durch konstruktive Einfachheit und geringe Herstellungskosten aus. Durch die Anordnung der beiden Halbringscheiben wird ein sogenannter Kniehebeleffekt erzeugt, d.h. die beiden Halbringscheiben stützen sich an ihren Enden schwenkbar aufeinander ab und werden bei Bewegungsumkehr des Kolbens nach dem Straffervorgang mit einer nur sehr kleinen Einsteuerbewegung aus ihrer Schrägstellung aufgerichtet und dringen in die Wandung des Zylinders ein. Dies hat den Vorteil, daß unmittelbar bei einer Bewegungsumkehr des Kolbens die Rücklaufsperre aktiviert sowie der Kolben blockiert wird und die von dem Gurtstraffervorgang verursachte Beseitigung der Gurtlose im wesentlichen erhalten bleibt.

Zweckmäßig ist es, daß die Umfangsenden der Halbringscheiben auf einer radialen Begrenzungswand der Umfangsnut schwenkbar abgestützt sind. Dabei ist insbesondere vorteilhaft, daß die der radialen Begrenzungswand gegenüberliegende Begrenzungswand der Umfangsnut schräg zur Achse des Kolbens geneigt ist. Die beiden Halbringscheiben werden beim Beschleunigen des Kolbens für den Straffervorgang gleichmäßig gegen die schräg geneigte Begrenzungswand gedrückt, wenn die Neigung der Begrenzungswand jeweils der Neigung entspricht, die die Halbringscheiben in ihrer entgegengesetzten Schrägstellung zur Achse des Kolbens einnehmen.

Die Rücklaufsperre kann auch in einem Kolben verwendet werden, der Teil eines Kolben/Zylinder-Linearantriebs des Gurtstraffers ist. Dafür ist es vorteilhaft, wenn die schräg geneigte Begrenzungswand an ihrem Außenumfang mit einer umlaufenden Stufe versehen ist, in der ein O-Dichtring angeordnet ist, der an seinem Außenumfang mit der Wandung des Zylinders in Berührung ist und an dessen der radialen Begrenzungswand zugewandten Seite die Halbringscheiben in Axialrichtung abgestützt sind. Der O-Dichtring wirkt sowohl als Dichtmittel für die den Kolben für den Straffervorgang beaufschlagenden Gase als auch als Federelement, das die Halbringscheiben gegen die Zylinderwandung vorspannt.

Weitere Merkmale und Vorteile der Erfindung ergeben sich aus der folgenden Beschreibung und aus der Zeichnung, auf die Bezug genommen wird. In der Zeichnung zeigen:
- Fig. 1: einen schematischen Teillängsschnitt eines Zylinders mit einem Kolben gemäß einer erfindungsgemäßen Ausführungsform;
- Fig. 2: eine Vorderansicht einer Halbringscheibe gemäß der Ausführungsform von Fig. 1;
- Fig. 3: einen Querschnitt durch die Halbringscheibe von Fig. 2; und
- Fig. 4: eine Längsschnittansicht durch den Kolben gemäß der erfindungsgemäßen Ausführungsform von Fig. 1.

In einem rohrförmigen Zylinder 10 von kreisrundem Querschnitt ist auf einem Zugseil 12 ein Kolben 14 angeordnet, der einen O-Dichtring 16 und zwei Halbringscheiben 18 und 20 in einer ringförmigen Umfangsnut 22 aufweist. Der Kolben 14 ist in dem rohrförmigen Zylinder 10 verschieblich geführt. Der Zylinder 10 ist beispielsweise in einem Sicherheitsgurtsystem am Fahrzeug verankert sowie Teil eines Kolben/Zylinder-Linearantriebs, und an dem Zugseil 12 ist ein hier nicht dargestelltes Gurtschloß angeschlossen.

Die Umfangsnut 22 weist in Strafferrichtung F eine radiale Begrenzungswand 221 auf. Daran schließt sich eine zylindrische Fläche 222 an. In Richtung G, also entgegengesetzt zur Strafferrichtung F, weist die Umfangsnut 22 eine schräg zur Achse des Kolbens 14 geneigte Begrenzungswand 223 auf.

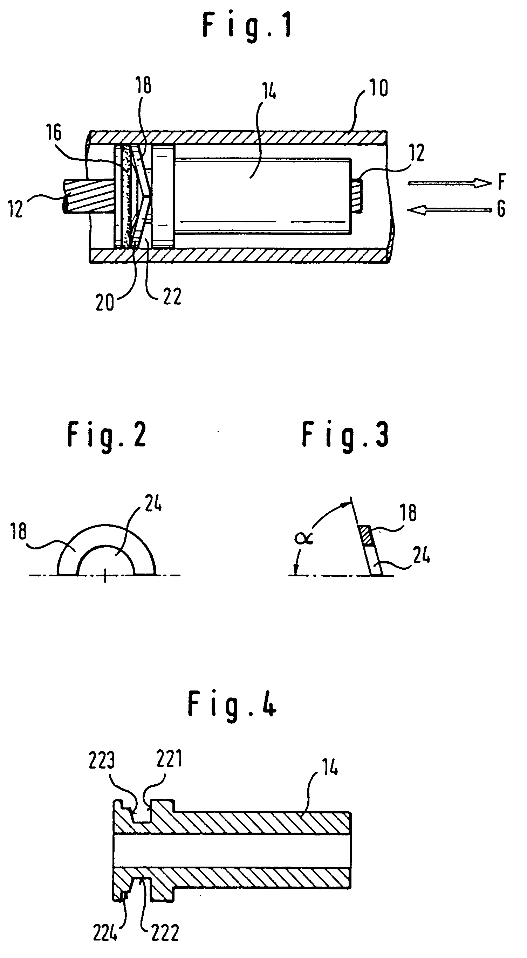

Die Halbringscheiben 18 und 20 sind in entgegengesetzter Schrägstellung zur Achse des Kolbens 14 und sich mit den Umfangsenden schwenkbar aufeinander und auf der Begrenzungswand 221 abstützend angeordnet. Durch die Begrenzungswand 223 werden die Halbringscheiben 18 und 20 in einer zur Achse des Zylinders 10 unter einem Winkel α von etwa 60° geneigten Ruhestellung gehalten (Fig. 3).

An dem Außenumfang der Begrenzungswand 223 ist eine umlaufende Stufe 224 vorgesehen. In dieser umlaufenden Stufe 224 ist der O-Dichtring 16 angeordnet. Der O-Dichtring 16 ist an seinem Außenumfang mit der Wandung des Zylinders in Berührung. Auf seiner der radialen Begrenzungswand 221 zugewandten Seite sind die Halbringscheiben 18 und 20 in Axialrichtung abgestützt.

Der vordere Bereich des Kolbens 14 weist einen geringeren Durchmesser auf als der hintere Bereich und ist mit dem Zugseil 12 verpreßt. Die in Fig. 1 gezeigte Kolben/Zylinder-Anordnung bildet den Linearantrieb des am Gurtschloß angreifenden Gurtstraffers. Der Kolben 14 in dem Zylinder 10 wird mit dem Druck der durch einen pyrotechnischen Gasgenerator erzeugten Gase beaufschlagt, so daß der Kolben 14 in Fig. 1 in Richtung des Pfeils F im Zylinder 10 verschoben wird, wobei das Zugseil 12 und folglich das daran angeschlossene Gurtschloß mitgenommen werden. Bei einer Bewegung des Kolbens 14 in Strafferrichtung F verbleiben die Halbringscheiben 18 und 20 in ihrer geneigten Stellung. Nach erfolgter Gurtstraffung beginnt die Vorverlagerung des durch das Gurtsystem gesicherten Fahrzeuginsassen, wobei ein Zug über das Zugseil in Richtung des Pfeils G in Fig. 1 auf den Kolben 14 ausgeübt wird. Dabei richten sich die Halbringscheiben 18 und 20 auf und drücken auf der einen Seite gegen die Wandung des Zylinders 10 und auf der anderen Seite mit der Verschwenkung zunehmend gegeneinander. Durch Verkeilen der Halbringscheiben 18 und 20 mit der Zylinderwandung ist dann der Kolben 14 in Richtung G sicher gesperrt ist.

## Patentansprüche

1. Gurtstraffer in einem Fahrzeugsicherheitsgurtsystem, mit einer Kolben/Zylinder Anordnung (10, 14), einem Zugseil (12), das einerseits an dem Gurtschloß und andererseits an dem im Zylinder (10) verschiebbar gelagerten Kolben (14) angeschlossen ist, und einer Rücklaufsperre (16, 18, 20, 22), die eine Bewegung des Kolbens (14) entgegen der Strafferrichtung (F) verhindert, **dadurch gekennzeichnet**, daß der Kolben (14) eine Umfangsnut (22) aufweist, in der zwei Halbringscheiben (18, 20) in entgegengesetzter Schrägstellung zur Achse des Kolbens (14) und sich mit den Umfangsenden aufeinander abstützend angeordnet sowie an ihrem Außenumfang mit der Wandung des Zylinders (10) in Berührung gehalten sind.

2. Gurtstraffer nach Anspruch 1, **dadurch gekennzeichnet**, daß die Umfangsenden der Halbringscheiben (18, 20) auf einer radialen Begrenzungswand (221) der Umfangsnut (22) schwenkbar abgestützt sind.

3. Gurtstraffer nach Anspruch 2, **dadurch gekennzeichnet**, daß die der radialen Begrenzungswand (221) gegenüberliegende Begrenzungswand (223) der Umfangsnut (22) schräg zur Achse des Kolbens (14) geneigt ist.

4. Gurtstraffer nach Anspruch 3, **dadurch gekennzeichnet**, daß die Neigung der Begrenzungswand (223) jeweils der Neigung entspricht, die die Halbringscheiben (18, 20) bei ihrer entgegengesetzten Schrägstellung zur Achse des Kolbens (14) einnehmen.

5. Gurtstraffer nach Anspruch 3 oder 4, **dadurch gekennzeichnet**, daß die schräg geneigte Begrenzungswand (223) an ihrem Außenumfang mit einer umlaufenden Stufe (224) versehen ist, in der ein O-Dichtring (16) angeordnet ist, der an seinem Außenumfang mit der Wandung des Zylinders (10) in Berührung ist und an dessen der radialen Begrenzungswand (221) zugewandten Seite die Halbringscheiben (18, 20) in Axialrichtung abgestützt sind.

## Claims

1. A belt pretensioner for a vehicle safety belt system comprising a piston and cylinder unit (10, 14), a cable (12) which is connected on the one hand with the buckle and on the other hand with the piston (14) running in the cylinder (10), and a return stop device (16, 18, 20, 22) which prevents any motion of the piston (14) opposite the direction (F) of pretensioning, characterized in that the piston (14) has a circumferential groove (22), in which two semi-annular disks (18, 20) are arranged with an opposite oblique slope in relation to the axis of the piston (14) and so that the circumferential ends bear against one another and on their outer periphery are held in contact with the wall surface of the cylinder (10).

2. The belt pretensioner as claimed in claim 1, characterized in that the circumferential ends of the semi-annular disks (18, 20) pivotally bear against a radial limiting wall surface (221) of the circumferential groove (22).

3. The belt pretensioner as claimed in claim 2, characterized in that the limiting wall surface (223) of the circumferential groove (22), which is opposite to the radial limiting wall surface (221), is at a slant to the axis of the piston (14).

4. The belt pretensioner as claimed in claim 3, characterized in that the slant of the limiting wall surface (223) is respectively the same as the slant assumed by the semi-annular disks (18, 20) in their opposite oblique setting in relation to the axis of the piston (14).

5. The belt pretensioner as claimed in claim 3 or in claim 4, characterized in that the obliquely slanting limiting wall surface (223) is furnished with a circumferentially extending step (224) in its outer periphery, in which step an O-ring seal (16) is accommodated, which at its outer periphery is in contact with the wall surface of the cylinder (10) and against whose side facing the radial limiting wall surface (221) the semi-annular disks (18, 20) bear in the axial direction.

## Revendications

1. Tendeur de ceinture dans un système de ceinture de sécurité pour véhicule, comprenant un agencement à piston-cylindre (10, 14), un câble de traction (12), qui est relié d'une part à la serrure de la ceinture et d'autre part au piston (14) monté coulissant dans le cylindre (10), et un dispositif anti-retour (16, 18, 20, 22) qui interdit un déplacement du piston (14) en sens opposé au sens de tension (F), caractérisé en ce que le piston (14) comporte une rainure périphérique (22), dans laquelle deux demi-rondelles (18, 20) sont disposées dans des positions inclinées opposées par rapport à l'axe du piston (14) et en prenant appui l'une contre l'autre par leurs extrémités périphériques et sont maintenues en contact, au niveau de leur périphérie extérieure, avec la paroi du cylindre (10).

2. Tendeur de ceinture selon la revendication 1, caractérisé en ce que les extrémités périphériques des demi-rondelles (18, 20) prennent appui de manière pivotante sur une paroi radiale de délimitation (221) de la rainure périphérique (22).

3. Tendeur de ceinture selon la revendication 2, caractérisé en ce que la paroi de délimitation (223) qui appartient à la rainure périphérique (22) et qui est située en vis-à-vis de la paroi radiale de délimitation (221) est inclinée par rapport à l'axe du piston (14).

4. Tendeur de ceinture selon la revendication 3, caractérisé en ce que l'inclinaison de la paroi de délimitation (223) correspond à l'inclinaison que les demi-rondelles (18, 20) adoptent lorsqu'elles se trouvent en position inclinée opposée par rapport à l'axe du piston (14).

5. Tendeur de ceinture selon la revendication 3 ou 4, caractérisé en ce que la paroi de délimitation inclinée (223) comporte, à sa périphérie extérieure, un gradin périphérique (224) dans lequel est disposé un joint torique d'étanchéité (16) qui, à sa périphérie extérieure, est en contact avec la paroi du cylindre (10) et sur le côté duquel, ledit côté étant tourné vers la paroi radiale de délimitation (221), les demi-rondelles (18, 20) prennent appui dans le sens axial.
